# EUROPÄISCHE PATENTSCHRIFT

(11) **EP 3 038 842 B1**
(45) Veröffentlichungstag und Bekanntmachung des Hinweises auf die Patenterteilung: **19.12.2018**
(21) Anmeldenummer: 14720916.7
(22) Anmeldetag: 14.04.2014
(51) Int. Cl.: B60C 9/20, B60C 9/22

(54) **FAHRZEUGLUFTREIFEN**
PNEUMATIC TYRE FOR VEHICLE
PNEU DE VÉHICULE

(30) Priorität: 15.07.2013 DE 102013107477
(43) Veröffentlichungstag der Anmeldung: 06.07.2016
(73) Patentinhaber: Continental Reifen Deutschland GmbH, 30165 Hannover (DE)
(72) Erfinder: JOHN, Jacob, 30171 Hannover (DE); LACKO, Michal, 020 01 Puchov (SK); BISPO, Miguel, 30177 Hannover (DE); OWENS, Bridget, 30159 Hannover (DE)
(74) Vertreter: Finger, Karsten
(86) Internationale Anmeldenummer: PCT/EP2014/057460
(87) Internationale Veröffentlichungsnummer: WO 2015/007404

(56) Entgegenhaltungen:
- EP-A1- 1 787 825
- DE-A1-102011 001 228

## Beschreibung

Die Erfindung betrifft einen Fahrzeugluftreifen in Radialbauart für Nutzfahrzeuge, insbesondere Lastkraftwagen, Busse und Lastkraftwagenanhänger, mit einem dreilagigen Gürtel, dessen Gürtellagen Festigkeitsträger enthalten, die in jeder Gürtellage jeweils parallel zueinander verlaufen, wobei die mittlere Gürtellage eine 0°-Lage ist, deren Breite geringer ist als die Breite der ersten und der dritten Gürtellage, wobei die Festigkeitsträger in der einen der 0°-Lage benachbarten Gürtellage rechtssteigend und die Festigkeitsträger in der anderen der 0°-Lage benachbarten Gürtellage linkssteigend verlaufen und wobei die Festigkeitsträger in zumindest einer der der 0°-Lage benachbarten Gürtellagen eine Dehnung ≥0,2% bei 10% Bruchlast aufweisen, wobei die Dehnung mit Festigkeitsträgern gemessen wird, die dem fertig vulkanisierten Reifen entnommen sind.

Fahrzeugluftreifen mit dreilagig ausgeführten Gürteln sind bekannt. Bei einer dieser bekannten Gürtelkonstruktionen schließen die Festigkeitsträger in den drei Gürtellagen Winkel von 15° bis 32° mit der Umfangsrichtung ein, die Anordnung der Festigkeitsträger erfolgt gemäß der Abfolge rechtssteigend - rechtssteigend - linkssteigend. Bei einer anderen bekannten Gürtelkonstruktion schließen die Festigkeitsträger in der ersten Gürtellage einen Winkel von 35° bis 75° mit der Umfangsrichtung ein, ansonsten entspricht diese Ausführung der oben beschriebenen. Die Festigkeitsträger in der ersten und der zweiten Gürtellage sind daher gleichsteigend angeordnet, die Festigkeitsträger in der zweiten und der dritten Gürtellage kreuzen einander und sind die sogenannten Arbeitslagen.

Ein Fahrzeugluftreifen der eingangs genannten Art ist beispielsweise aus der DE 10 2011 001 228 A1 bekannt. Der Fahrzeugluftreifen weist einen dreilagigen Gürtel auf, wobei die mittlere Gürtellage eine 0°-Lage ist. Die Festigkeitsträger in der einen der 0°-Lage benachbarten Gürtellage verlaufen rechtssteigend und die Festigkeitsträger in der anderen der 0°-Lage benachbarten Gürtellage verlaufen linkssteigend, wobei die Festigkeitsträger dieser beiden Gürtellagen mit der Umfangsrichtung des Reifens jeweils einen Winkel von 10° bis 45 ° einschließen. Die Festigkeitsträger in zumindest einer der der 0°-Lage benachbarten Gürtellagen weisen bei 10% Bruchlast eine Dehnung von 0,22% bis 0,4% auf.

Aus der EP 1 787 825 B1 ist ebenfalls ein Schwerlastreifen mit einem dreilagigen Gürtel bekannt. Die mittlere Gürtellage ist als 0°-Lage ausgeführt, die Festigkeitsträger der einen der 0°- Lage benachbarten Gürtellage verlaufen rechtssteigend und die Festigkeitsträger in der anderen der 0°-Lage benachbarten Gürtellage linkssteigend, wobei die Festigkeitsträger der der 0°-Lage benachbarten Gürtellagen mit der Umfangsrichtung des Reifens jeweils einen Winkel von 10° bis 45 ° einschließen.

Ein Fahrzeugluftreifen mit mindestens vier Gürtellagen ist beispielsweise aus der DE 10 2010 000 181 A1 bekannt. Die Gürtellagen enthalten als Festigkeitsträger Stahlkorde, die in der radial äußersten Gürtellage und in der dieser benachbarten, zweitäußersten Gürtellage jeweils gleich steigend verlaufen. Der Winkel, den die Stahlkorde in der radial äußersten Gürtellage mit dem Reifenäquator einschließen, ist um 6° bis 15° größer als der Winkel, den die Stahlkorde in der zweitäußersten Gürtellage mit dem Reifenäquator einschließen. Durch diese Maßnahme soll eine Reduktion des Rollwiderstandes erzielt werden, die über die gesamte Lebensdauer des Reifens erhalten und somit wirksam bleibt.

Aus der EP 0 963 301 B1 ist eine ermüdungsbeständige Gürtelkonstruktion für Zwillingsreifen bildende Reifen für die Antriebsachse von Schwertlastfahrzeugen bekannt. Der Gürtel weist mindestens zwei Arbeitslagen aus undehnbaren Korden auf, die zueinander überkreuz verlaufen und zur Umfangsrichtung Winkel bilden, die 10° bis 45° betragen. Zwischen der Radialkarkasse und der radial inneren Arbeitslage befindet sich eine Gürtellage aus undehnbaren Stahlkorden, die mit der Umfangsrichtung einen Winkel von mindestens 60° einschließen. Zwischen den beiden Arbeitslagen ist eine zusätzliche Lage angeordnet, die Stahlkorde enthält, die im Wesentlichen in Umfangsrichtung ausgerichtet sind. Auf der radial am weitesten außen liegenden Arbeitslage und an jeder Seite des Reifens ist je eine zweite, zusätzliche Lage angeordnet, die ebenfalls Stahlkorde als Festigkeitsträger enthält, die im Wesentlichen parallel zur Umfangsrichtung ausgerichtet sind.

Bei einem typischen, als Dreiecksgürtel bekannten Gürtelaufbau für Schwerlastfahrzeuge sind vier Gürtellagen mit Stahlkorden als Festigkeitsträger vorgesehen, wobei die Stahlkorde in der ersten und in der zweiten Gürtellage übereinstimmende Steigungsrichtungen aufweisen und der Winkel, den die Stahlkorde in der ersten Gürtellage mit der Umfangsrichtung einschließen, 45° bis 70°, der Winkel, den die Stahlkorde in der zweiten Gürtellage mit der Umfangsrichtung einschließen, 15° bis 26° beträgt. Die Stahlkorde in der dritten und in der vierten Gürtellage haben üblicherweise eine entgegengesetzte Steigungsrichtung, wobei die Winkel, die die Stahlkorde in diesen beiden Gürtellagen mit der Umfangsrichtung einschließen, gleich groß sind und 15° bis 20° betragen. Es ist bekannt, dass die Winkelung der Stahlkorde in den einzelnen Gürtellagen den Abrieb des Laufstreifens beeinflussen kann, die bekannten Gürtelkonstruktionen sind jedoch hinsichtlich eines gleichmäßigen Abriebes verbesserungswürdig.

Der Erfindung liegt somit die Aufgabe zugrunde, einen Fahrzeugluftreifen der eingangs genannten Art mit drei Gürtellagen im Gürtelverband derart auszuführen, dass der Reifen im Abrieb verbessert ist, insbesondere im Betrieb über seine Laufstreifenbreite einen gleichmäßigen Abrieb aufweist.

Gelöst wird die gestellte Aufgabe erfindungsgemäß dadurch, dass der Winkel, den die Festigkeitsträger in der ersten Gürtellage mit der Umfangsrichtung des Reifens einschließen, und der Winkel, den die Festigkeitsträger in der dritten Gürtellage mit der Umfangsrichtung des Reifens einschließen, jeweils 48° bis 70° beträgt.

Von besonderer Bedeutung für die Erfindung ist die Kombination einer mittleren 0°-Lage im Gürtelverband mit der ersten und der dritten Gürtellage, deren Festigkeitsträger einen relativ großen Winkel mit der Umfangsrichtung einschließen. Die 0°-Lage bewirkt eine sehr gute Umfangssteifigkeit und ist für einen gleichmäßigen Abrieb des Laufstreifens in den Schulterbereichen von Vorteil. Die erste und dir dritte Gürtellage, deren Festigkeitsträger unter einem relativ großen Winkel zur Umfangsrichtung verlaufen, erhöhen die Quersteifigkeit in den seitlichen Laufstreifenbereichen des Reifens und vergleichmäßigen dadurch vor allem den Abrieb im mittleren Bereich des Laufstreifens. Die dehnbaren Festigkeitsträger in der ersten und/oder der dritten Gürtellage wirken auf die Umfangs- und Quersteifigkeit zusätzlich ausgleichend. Durch die Erfindung wird daher ein Reifen mit einem gleichmäßigen Laufstreifenabrieb über seine gesamte Breite zur Verfügung gestellt.

Bei einer weiteren erfindungsgemäßen Ausgestaltung können die Festigkeitsträger in der dritten Gürtellage oder jene in der ersten und in der dritten Gürtellage eine Dehnung ≥ 0,2 % bei 10 % Bruchlast aufweisen, wobei die Dehnung mit Festigkeitsträgern gemessen wird, die dem fertig vulkanisierten Reifen entnommen sind. Die bereits erwähnte ausgleichende Wirkung der dehnbaren Festigkeitsträger in diesen Lagen kann daher, vor allem in Abhängigkeit vom tatsächlich gewählten Winkel der Festigkeitsträger in diesen Gürtellagen, optimiert werden.

Weitere Merkmale, Vorteile und Einzelheiten der Erfindung werden nun anhand der schematischen Zeichnung, die ein Ausführungsbeispiel darstellt, näher beschrieben. Dabei zeigen
Fig. 1 einen Teilquerschnitt eines Fahrzeugluftreifens im Gürtel- und Laufstreifenbereich mit einer Ausführungsvariante der Erfindung und
Fig. 2 eine Draufsicht auf Abschnitte der Gürtellagen aus Fig. 1.

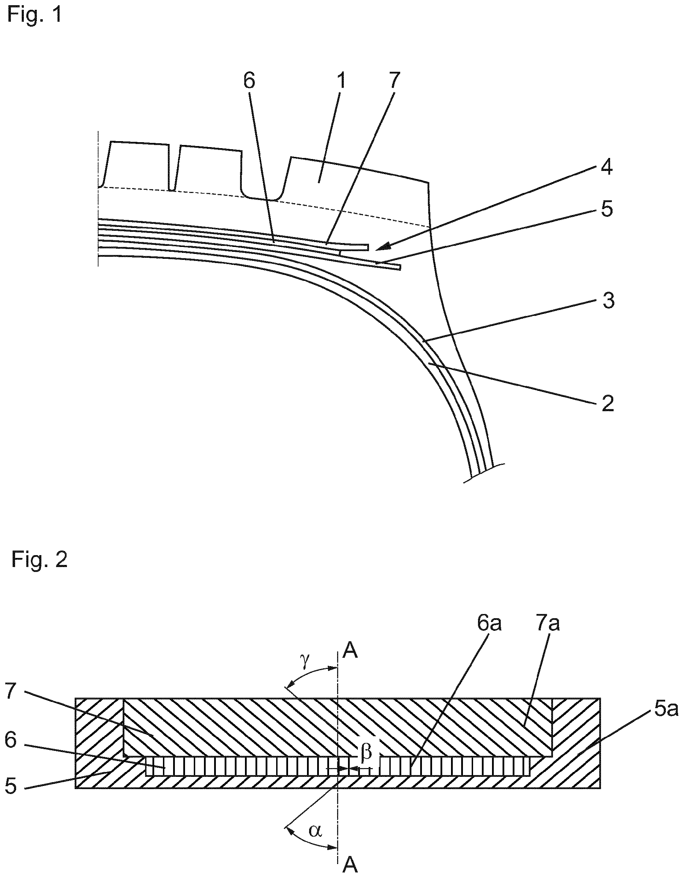

Fig. 1 zeigt einen Querschnitt durch den Laufstreifen- und Gürtelbereich eines Fahrzeugluftreifens für Nutzfahrzeuge, wie beispielsweise Lastkraftwagen, Busse oder Lastkraftwagenanhänger. Von den im gezeigten Bereich des Fahrzeugluftreifens üblicherweise vorhandenen Bauteilen sind ein profilierter Laufstreifen 1, eine Innenschicht 2, eine Karkasseinlage 3 und ein mehrlagiger Gürtel 4 dargestellt. Nicht dargestellt sind die üblicherweise zwischen den Randabschnitten der Gürtellagen, insbesondere im Bereich der Gürtellagenkanten, vorgesehenen Gürtelpolster und dergleichen.

Der Gürtel 4 weist drei Gürtellagen 5, 6, und 7 auf. Sämtliche Gürtellagen 5, 6, und 7 bestehen aus in eine Gummimischung, der sogenannten Gürtelgummierung, eingebetteten Festigkeitsträgern 5a, 6a und 7a, welche in jeder Lage parallel zueinander verlaufen und beispielsweise in an sich bekannter Weise ausgeführte Stahlkorde oder Korde basierend auf Polyamiden (Aramid), Polyestern, Glasfasern oder einem sonstigen geeigneten Material sind. Die Festigkeitsträger können auch Hybridkorde sein, bei denen Filamente oder Garne aus unterschiedlichen Materialien zu einem Kord verarbeitet sind. Die erste, radial innerste Gürtellage 5 ist die breiteste Gürtellage, die mittlere, zweite Lage 6 ist schmäler als die erste Gürtellage 5 und auch schmäler als die dritte, radial äußerste Gürtellage 7, welche ihrerseits etwas schmäler ist als die erste Gürtellage 5. Die Gürtellage 6 ist eine 0°-Lage, das heißt ihre Festigkeitsträger 6a verlaufen unter einem Winkel β zur Umfangsrichtung A-A, welcher von 0° um maximal ± 5° abweicht. Bei der in den Figuren gezeigten Ausführungsform verlaufen die Festigkeitsträger 5a in der ersten Gürtellage 5 rechtssteigend und unter einem Winkel α von 35° bis 70°, insbesondere 43° bis 57°, vorzugsweise ≥ 48°, relativ zur Umfangsrichtung A-A. Die Festigkeitsträger 7a in der dritten Gürtellage 7 verlaufen linkssteigend und unter einem Winkel γ von 35° bis 70°, insbesondere von 43° bis 57°, vorzugsweise ist y ≥ 48°. Bei einer möglichen Alternative dieser Ausführungsform können die Festigkeitsträger in der ersten Gürtellage 5 linkssteigend und die Festigkeitsträger in der dritten Gürtellage 7 rechtssteigend verlaufen. Die Festigkeitsträger 5a, 7a in zumindest einer der Gürtellagen 5, 7 weisen eine Dehnung ≥ 0,2 % bei 10% Bruchlast auf. Die Dehnung wird mit Festigkeitsträgern ermittelt, die dem fertig vulkanisierten Reifen entnommen werden. Die Messung erfolgt gemäß ASTM D 2969 - 04.

Bei der Erfindung ist die Kombination einer 0°-Lage, der Gürtellage 6, mit der radial äußersten Gürtellage 7, deren Festigkeitsträger 7a unter dem erwähnten Winkel γ zum Reifenäquator A-A verlaufen, wesentlich. Es ist dabei vorteilhaft, wenn die Festigkeitsträger 7a in der radial äußersten Gürtellage 7 linkssteigend verlaufen.

Die 0°-Lage in erfindungsgemäßen Gürtelkonstruktionen bewirkt eine sehr gute Umfangssteifigkeit des Reifens im Laufstreifenbereich, was für einen gleichmäßigen Abrieb des Laufstreifens in den Schulterbereichen vorteilhaft ist. Die radial äußerste Gürtellage 7 mit Festigkeitsträgern, die zur Umfangsrichtung A-A unter einem Winkel γ von bis zu 70° verlaufen, sorgt für eine gute Quersteifigkeit, unterstützt einen gleichmäßigen Abrieb des Laufstreifens im mittleren Bereich und insgesamt einen geringen Laufstreifenabrieb.

### Bezugsziffernliste

- 1: Laufstreifen
- 2: Innenschicht
- 3: Karkasseinlage
- 4,: Gürtel
- 5, 6, 7,: Gürtellage
- 5a, 6a: Festigkeitsträger
- A-A: Umfangsrichtung
- α, β, γ: Winkel

## Patentansprüche

1. Fahrzeugluftreifen in Radialbauart für Nutzfahrzeuge, insbesondere Lastkraftwagen, Busse und Lastkraftwagenanhänger, mit einem dreilagigen Gürtel (4), dessen Gürtellagen (5, 6, 7) Festigkeitsträger (5a, 6a, 7a) enthalten, die in jeder Gürtellage (5, 6, 7) jeweils parallel zueinander verlaufen, wobei die mittlere Gürtellage eine 0°-Lage ist, deren Breite geringer ist als die Breite der ersten und der dritten Gürtellage (6, 7), wobei die Festigkeitsträger (5a, 7a) in der einen der 0°-Lage (6) benachbarten Gürtellage (5, 7) rechtssteigend und die Festigkeitsträger (5a, 7a) in der anderen der 0°-Lage (6) benachbarten Gürtellage (5, 7) linkssteigend verlaufen und wobei die Festigkeitsträger (5a, 7a) in zumindest einer der der 0°-Lage (6) benachbarten Gürtellagen (5, 7) eine Dehnung ≥0,2% bei 10% Bruchlast aufweisen, wobei die Dehnung mit Festigkeitsträgern gemessen wird, die dem fertig vulkanisierten Reifen entnommen sind,
**dadurch gekennzeichnet,**
**dass** der Winkel (γ), den die Festigkeitsträger (7a) in der dritten Gürtellage (7) mit der Umfangsrichtung (A-A) des Reifens einschließen, und der Winkel (α), den die Festigkeitsträger (5a) in der ersten Gürtellage (5) mit der Umfangsrichtung (A-A) des Reifens einschließen, jeweils 48° bis 70° beträgt.

2. Fahrzeugluftreifen nach Anspruch 1, **dadurch gekennzeichnet, dass** die Festigkeitsträger (7a) in der dritte Gürtellage (7) eine Dehnung ≥0,2% bei 10% Bruchlast aufweisen, wobei die Dehnung mit Festigkeitsträgern gemessen wird, die dem fertig vulkanisierten Reifen entnommen sind.

3. Fahrzeugluftreifen nach Anspruch 1 oder 2, **dadurch gekennzeichnet, dass** die Festigkeitsträger (5a, 7a) in der ersten und in der dritten Gürtellage (5, 7) eine Dehnung ≥0,2% bei 10% Bruchlast aufweisen, wobei die Dehnung mit Festigkeitsträgern gemessen wird, die dem fertig vulkanisierten Reifen entnommen sind.

4. Fahrzeugluftreifen nach einem der Ansprüche 1 bis 3, **dadurch gekennzeichnet, dass** die Festigkeitsträger (7a) in der dritten Gürtellage (7) rechtssteigend verlaufen.

## Claims

1. Pneumatic vehicle tyre of radial design for commercial vehicles, in particular trucks, buses and truck trailers, having a three-ply belt (4), the belt plies (5, 6, 7) of which contain reinforcements (5a, 6a, 7a), which run parallel to each other in each belt ply (5, 6, 7), wherein the middle belt ply is a 0° ply, the width of which is less than the width of the first and third belt ply (6, 7), wherein the reinforcements (5a, 7a) in one belt ply (5, 7) that is adjacent to the 0° ply (6) slope upward to the right and the reinforcements (5a, 7a) in the other belt ply (5, 7) that is adjacent to the 0° ply (6) slope upward to the left, and wherein the reinforcements (5a, 7a) in at least one of the belt plies (5, 7) that are adjacent to the 0° ply (6) have an elongation of ≥ 0.2% at 10% of the breaking load, wherein the elongation is measured using reinforcements taken from the fully vulcanized tyre, **characterized**
**in that** the angle (γ) which the reinforcements (7a) in the third belt ply (7) enclose with the circumferential direction (A-A) of the tyre, and the angle (α) which the reinforcements (5a) in the first belt ply (5) enclose with the circumferential direction (A-A) of the tyre, is in each case 48° to 70°.

2. Pneumatic vehicle tyre according to Claim 1, **characterized in that** the reinforcements (7a) in the third belt ply (7) have an elongation of ≥ 0.2% at 10% of the breaking load, wherein the elongation is measured using reinforcements taken from the fully vulcanized tyre.

3. Pneumatic vehicle tyre according to Claim 1 or 2, **characterized in that** the reinforcements (5a, 7a) in the first and third belt ply (5, 7) have an elongation of ≥ 0.2% at 10% of the breaking load, wherein the elongation is measured using reinforcements taken from the fully vulcanized tyre.

4. Pneumatic vehicle tyre according to one of Claims 1 to 3, **characterized in that** the reinforcements (7a) in the third belt ply (7) slope upward to the right.

## Revendications

1. Pneumatique de véhicule à structure radiale pour véhicules utilitaires, en particulier pour camions, autobus et remorques de camions, présentant une ceinture (4) en trois couches dont les couches de ceinture (5, 6, 7) contiennent des renforts (5a, 6a, 7a) qui s'étendent à chaque fois parallèlement les uns aux autres dans chaque couche de ceinture (5, 6, 7), la couche de ceinture intermédiaire étant une couche à 0° dont la largeur est inférieure à la largeur de la première et la troisième couche de ceinture (6, 7), les renforts (5a, 7a) dans certaines couches de ceinture (5, 7) voisines de la couche (6) à 0° présentant une pente montant vers la droite et les renforts (5a, 7a) présents dans les autres couches de ceinture (5, 7) voisines de la couche (6) à 0° présentant une pente montant vers la gauche, et les renforts (5a, 7a) présents dans au moins une des couches de ceinture (5, 7) voisines de la couche (6) à 0° présentant à 10 % de la charge de rupture un allongement ≥ 0,2 %, l'allongement étant mesuré sur des renforts prélevés dans le pneumatique vulcanisé prêt à l'emploi,
**caractérisé en ce que**
l'angle (γ) formé par les renforts (7a) dans la troisième couche de ceinture (7) avec la direction périphérique (A-A) du pneumatique, et l'angle (a) formé par les renforts (5a) dans la première couche de ceinture (5) avec la direction périphérique (A-A) du pneumatique, vaut à chaque fois 48° à 70°.

2. Pneumatique de véhicule selon la revendication 1, **caractérisé en ce que** les renforts (7a) dans la troisième couche de ceinture (7) présentent à 10 % de la charge de rupture un allongement ≥ 0,2 %, l'allongement étant mesuré sur des renforts prélevés dans le pneumatique vulcanisé prêt à l'emploi.

3. Pneumatique de véhicule selon la revendication 1 ou 2, **caractérisé en ce que** les renforts (5a, 7a) dans la première et la troisième couche de ceinture (5,7) présentent à 10 % de la charge de rupture un allongement ≥ 0,2 %, l'allongement étant mesuré sur des renforts prélevés dans le pneumatique vulcanisé prêt à l'emploi.

4. Pneumatique de véhicule selon l'une des revendications 1 à 3, **caractérisé en ce que** les renforts (7a) dans la troisième couche de ceinture (7) s'étendent sous une pente une pente à angle droit.
